# EUROPÄISCHE PATENTSCHRIFT

(11) **EP 0 898 454 B1**
(45) Veröffentlichungstag und Bekanntmachung des Hinweises auf die Patenterteilung: **03.05.2000**
(21) Anmeldenummer: 97906975.4
(22) Anmeldetag: 26.03.1997
(51) Int. Cl.: A47B 57/40, F16B 12/32, A47B 57/30, F16B 7/04

(54) **TRAGGESTELL**
SUPPORTING FRAME
CADRE PORTEUR

(30) Priorität: 09.05.1996 CH 118896
(43) Veröffentlichungstag der Anmeldung: 03.03.1999
(73) Patentinhaber: MAX MITSCHJETA AG, CH-9202 Gossau (CH)
(72) Erfinder: MITSCHJETA, Janos, CH-9230 Flawil (CH); MITSCHJETA, Rolf, CH-9202 Gossau (CH)
(74) Vertreter: Wenger, René
(86) Internationale Anmeldenummer: CH9700127
(87) Internationale Veröffentlichungsnummer: WO9742856

(56) Entgegenhaltungen:
- EP-A- 0 398 014
- DE-U- 9 109 150
- FR-A- 2 587 085
- NL-A- 6 709 624

## Beschreibung

Die Erfindung betrifft ein Traggestell gemäss dem Oberbegriff von Anspruch 1. Derartige Traggestelle werden beispielsweise im Messestandbau oder im Ladenbau verwendet. Sie können im Baukastenprinzip mit Standardbauteilen rasch zusammengebaut, abgeändert oder demontiert werden. Je nach Einsatzzweck müssen sie teilweise auch schwere Lasten aufnehmen können und sie müssen daher auch eine hohe Stabilität aufweisen.

Durch die CH-A 654 990 ist beispielsweise ein gattungsmässig vergleichbares Traggestell bekannt geworden, bei dem die Eingriffsmittel Spreizelemente aufweisen, die nach dem Einführen in eine Oeffnung an der Säule auseinanderdrängbar sind. Die Spreizelemente werden auf diese Weise in der Oeffnung verspannt. Ein Nachteil dieser Lösung besteht darin, dass die Eingriffsmittel eine Doppelfunktion ausüben müssen und gleichzeitig die tragende Verbindung mit der Säule herstellen und als Spannelemente zum spielfreien Verspannen der Traverse mit der Säule dienen. Die Seitenstabilität der Traverse relativ zur Säule ist ungenügend, da die verspannten Eingriffsmittel Querkräften nur einen geringen Widerstand entgegensetzen.

Durch die EP A 398 014 ist ein variables Arbeitsplatz-Möbelsystem bekannt geworden, bei dem ebenfalls Traversen in mehreckige Säulen eingehängt und verspannt werden können. Die Enden der Traversen sind zu diesem Zweck mit einem Adapterteil versehen, an dem die Haken zum Einhängen angebracht sind. Das Verspannen der Haken erfolgt über eine Spannschraube mittels einer Schrägführung, wobei beim Anziehen der Spannschraube das Adapterteil gegen die Säule gepresst wird.

Es ist daher eine Aufgabe der Erfindung, ein Traggestell der eingangs genannten Art zu schaffen, das nicht nur einfach und schnell montiert und demontiert werden kann, sondern das auch eine hohe Seitenstabilität der Traverse an der Säule gewährleistet. Es sollen damit verwindungssteife Traggestelle gebaut werden können, die hohe Lasten aufnehmen und die auch gegenüber unvorhergesehenen Krafteinwirkungen z.B. beim Verschieben usw. stabil sind. Diese Aufgabe wird erfindungsgemäss mit einem Traggestell gelöst, das die Merkmale im Anspruch 1 aufweist.

Bei dieser Lösung müssen die Eingriffsmittel keine Doppelfunktion mehr ausüben. Sie dienen ausschliesslich dazu, die tragende Verbindung zwischen der Traverse und der Säule herzustellen. Die spielfreie Sicherung und Verspannung der Traverse wird dabei von den Klemmstücken übernommen, die zudem ein hohes Mass an Seitenstabilität gewährleisten. Da sich die Klemmstücke über eine Stützleiste an der Traverse abstützen, können die Klemmstücke beim Anziehen der Klemmschraube eine geringe Schwenkbewegung ausführen. Durch die Hebelwirkung pressen sich dabei die Spannflächen gegen die Oberfläche der Säule, wobei die relative Lage bzw. Neigung der Spannflächen dafür sorgt, dass in Längsrichtung der Traverse eine Spannkraft erzeugt wird, welche die Traverse von der Säule wegzieht oder ggf. auch gegen die Säule presst. Die beiden Klemmstücke bewirken dabei ausserdem noch, dass die Traverse gegenüber der Säule zentriert wird. Die Konstruktion zeichnet sich durch eine hohe mechanische Stabilität und Robustheit aus und ausser dem Einführen der Eingriffsmittel und dem Anziehen der Klemmschraube sind keinerlei Manipulationen erforderlich. Wird als Klemmschraube eine Flügelschraube eingesetzt, sind keinerlei Werkzeuge erforderlich.

Ein besonders einfacher Anschluss der Traversen an die Säule wird dadurch ermöglicht, dass die Oeffnungen in der Säule in Längsrichtung verlaufende Schlitze sind und dass die Eingriffsmittel wenigstens eine abgewinkelte Lasche aufweisen, welche in einen Schlitz einführbar ist und diesen hintergreift. Auf diese Weise ist gewährleistet, dass die Traversen nur in einer lagerichtigen Position an die Säulen angeschlossen werden können. Das Hintergreifen des Schlitzes durch die abgewinkelte Lasche ermöglicht ausserdem bereits eine provisorische Fixierung der Traverse, bevor die Spannmittel betätigt werden müssen. Selbstverständlich könnten die Eingriffsmittel aber auch eine beliebige andere Konfiguration aufweisen. Sie könnten beispielsweise auch als Bolzenköpfe ausgebildet sein, die durch eine Oeffnung in die Säule eingeführt werden und deren Bolzenschaft in der Endstellung in einem an die Oeffnung anschliessenden Schlitz liegt.

Besonders vorteilhaft weisen die Eingriffsmittel zwei parallel und übereinander angeordnete Laschenpaare auf, wobei jede Lasche in einen separaten Schlitz eingreift. Damit kann eine stabile und verwindungssteife Verbindung hergestellt werden. Selbstverständlich kann es in bestimmten Fällen auch genügen, nur eine einzige Lasche oder nur ein Laschenpaar zu verwenden.

Die Eingriffsmittel können fest am Endabschnitt der Traverse angeordnet sein und über diesen hinausragen. Diese Lösung ist fabrikationstechnisch einfach und genügt in den meisten Fällen. Muss eine Traverse jedoch an beiden Enden zwischen zwei vorhandenen und bereits fest montierten Säulen angeschlossen werden, ist es zweckmässig, wenn die Eingriffsmittel zwischen einer in den Endabschnitt der Traverse zurückgezogenen Montagestellung und einer über den Endabschnitt hinausragenden Eingriffsstellung verschiebbar gelagert sind. Auf diese Weise kann eine Traverse zwischen zwei Säulen eingefügt werden, ohne dass die Säulen für den Anschlussvorgang wegbewegt werden müssen. Die Eingriffsmittel werden erst bei der eingefügten Traverse ausgefahren und dringen dann ohne weitere Relativbewegung zwischen Säule und Traverse in die Oeffnungen. Eine verschiebbare Lagerung der Eingriffsmittel ist beispielsweise über eine Hebelmechanik, über einen einfachen Schieber oder dergleichen mehr realisierbar.

Die Klemmschraube kann ein erstes Klemmstück und die Traverse durchdringen und in eine Gewindebohrung im zweiten Klemmstück eingeschraubt sein. Auf diese Weise ist nur eine einzige Schraube erforderlich und bei deren Betätigung werden beide Klemmstücke simultan gegen die Traverse gepresst. Es wäre aber ohne weiteres auch denkbar, jedes Klemmstück mit einer separaten Klemmschraube zu versehen, welche in die Traverse eingeschraubt ist. Selbstverständlich könnte an der Traverse aber auch auf jeder Seite ein fester Schraubenbolzen angeordnet sein, der die Klemmstück durchdringt und der aus diesen herausragt, wobei ein Anziehen über eine aussen an den Klemmstücken anliegende Mutter erfolgt.

Als Klemmschrauben können Inbusschrauben, Senkschrauben, Flügelschrauben usw. verwendet werden. Müssen die Klemmstücke aus Stabilitätsgründen eine bestimmte Höhe aufweisen, kann es auch zweckmässig sein, mehr als eine Schraube pro Klemmstück verwenden.

Eine besonders vorteilhafte Wirkung der Klemmstücke kann erzielt werden, wenn die Spannflächen der beiden Klemmstücke zwischen sich einen sich gegen die Säule öffnenden Winkel bilden. Beim Zusammenpressen dieser beiden Flächen wird eine Kraftkomponente erzielt, welche die Traverse von der Säule wegdrängt und dadurch verspannt. Diese Wirkung lässt sich praktisch bei jedem beliebigen Rohquerschnitt, also auch bei runden oder ovalen Rohren erzielen.

Die Klemmstücke können prismatische Körper mit einem in der Ebene der Traverse im wesentlichen parallelogrammartigen Querschnitt sein. Auf diese Weise lassen sich die Klemmstücke von entsprechend geformten Profilen ablängen.

Die Säule kann ein Rohr mit einem polygonalen Querschnitt sein, welches auf jedem Flächenabschnitt Oeffnungen aufweist. Derart können Traversen in verschiedenen Winkellagen am Rohr angeschlossen werden. Wenn der polygonale Rohrquerschnitt wenigstens sechs Ecken aufweist und wenn die Anzahl der Ecken stets durch zwei teilbar ist, können auf der gleichen horizontalen Ebene stets mehrere Traversen angeschlossen werden, ohne dass sich diese gegenseitig behindern, also beispielsweise drei Traversen an einem sechseckigen Rohr, vier Traversen an einem achteckigen Rohr usw.. Jeweils ein Flächenabschnitt des Rohres dient dabei als stirnseitige Anschlagfläche für die Traverse, während die beiden an die Anschlagfläche anschliessenden Flächenabschnitte als Anlagefläche für die Spannflächen der Klemmstücke dienen. Bei entsprechender Dimensionierung der Klemmstücke kann somit jeweils eine Anlagefläche die Spannflächen benachbarter Klemmstücke aufnehmen.

Weitere Einzelmerkmale und Vorteile der Erfindung ergeben sich aus der nachstehenden Beschreibung von Ausführungsbeispielen und aus den Zeichnungen. Es zeigen:
- Figur 1: eine Säule mit zwei bereits angeschlossenen und mit einer anzuschliessende Traverse in perspektivischer Darstellung,
- Figur 2: die Säule gemäss Figur 1 mit angeschlossener Traverse,
- Figur 3: ein horizontaler Querschnitt durch eine Verbindung zwischen Säule und Traverse,
- Figur 4: ein vertikaler Querschnitt durch die Verbindung gemäss Figur 3,
- Figur 5: ein als Auslegerregal dienendes Traggestell mit den Merkmalen der Erfindung und
- Figur 6: eine Seitenansicht des Traggestells gemäss Figur 5.

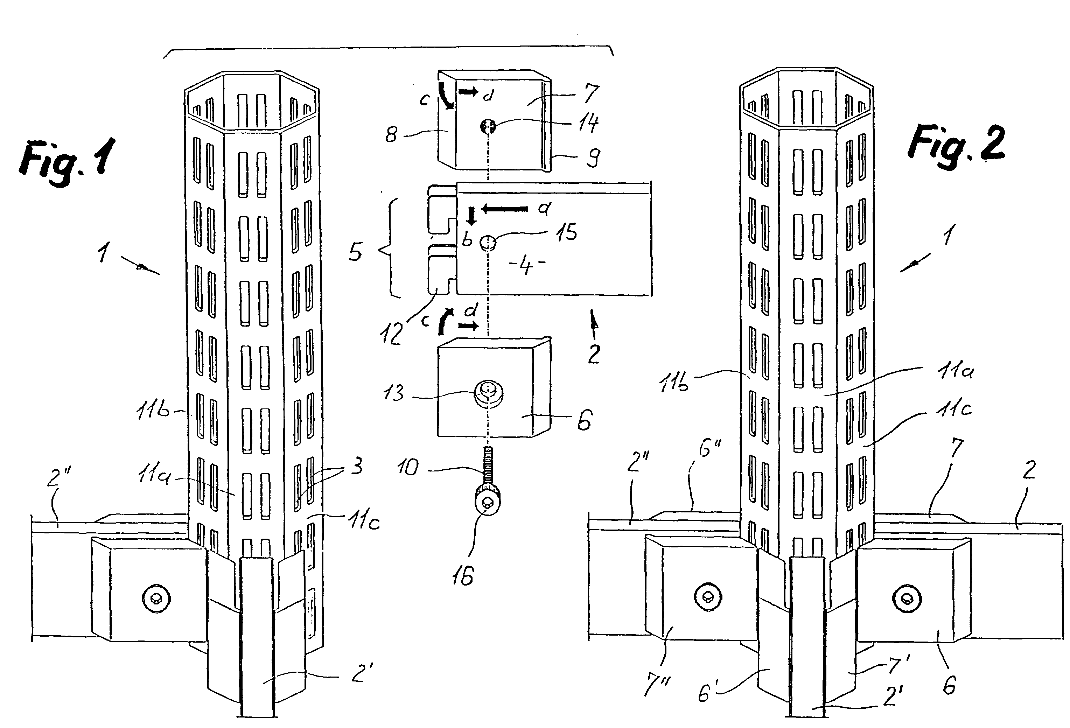

In Figur 1 ist eine Säule 1 dargestellt, die als achteckiges Hohlprofil ausgebildet ist. Die Säule hat somit insgesamt acht Flächenabschnitte, wobei jeder Flächenabschnitt lla, llb, llc usw. mit einer Doppelreihe von Schlitzen 3 versehen ist. An der Säule sind bereits die nur teilweise dargestellten Traversen 2' und 2" angeschlossen, während eine weitere Traverse 2 noch anzuschliessen ist. Die Traversen werden dabei durch rechteckige Hohlprofile gebildet.

Die Traverse 2 ist an ihrem Endabschnitt 4 mit Eingriffsmitteln 5 versehen, welche im gleichen Raster wie die Oeffnungen 3 an der Säule angeordnet sind und welche in diese Oeffnungen eingeführt werden können. Auf beiden Seiten des Endabschnitts 4 ist je ein Klemmstück 6 und 7 befestigt. Die Klemmstücke sind mit je einer Spannfläche 8 und mit einer Stützleiste 9 versehen. Die Befestigung der Klemmstücke erfolgt mittels einer Klemmschraube 10, die als Inbusschraube mit einem Schraubenkopf 16 ausgebildet ist. Die Klemmschraube durchdringt dabei eine Druchgangsbohrung 15 in der Traverse 2 und ist in eine Gewindebohrung 14 am Klemmstück 7 eingeschraubt. Der Schraubenkopf 16 ist in einem Senkloch 13 versenkt.

Zum Anschliessen der Traverse 2 werden die Eingriffsmittel 5, bestehend aus insgesamt vier winkelförmigen Laschen 12 in die Schlitze 3 in Pfeilrichtung a eingeführt. Anschliessend wird die Traverse 2 in Pfeilrichtung b nach unten gepresst, so dass die Laschen 12 jeweils am unteren Rand eines Schlitzes 3 aufliegen. Anschliessend wird die Klemmschraube 10 angezogen, wobei die Klemmstücke 6 und 7 um ihre jeweilige Stützleiste 9 eine Schwenkbewegung in Pfeilrichtung c gegen die Traverse hin ausführen. Die Spannflächen 8 der Klemmstücke werden dabei gegen die Oberflächenabschnitte 11 an der Säule gepresst, was eine Kraftresultierende in Pfeilrichtung d bewirkt. Diese Kraftresultierende in Längsrichtung der Traverse 2 bewirkt ein Verspannen der Eingriffsmittel in den Oeffnungen 3. Die angeschlossene Traverse 2 ist in Figur 2 dargestellt.

Figur 2 zeigt ausserdem, dass die drei Traversen 2, 2' und 2" auf der gleichen horizontalen Ebene angeschlossen werden können, ohne dass sie sich gegenseitig behindern. Der Flächenabschnitt lla dient dabei als stirnseitige Anschlagfläche für die Traverse 2', wobei deren Klemmstücke 6' und 7' am Flächenabschnitt 11b bzw. 11c anliegen. Die genannten Flächenabschnitte dienen aber gleichzeitig auch noch als Anlageflächen für die Klemmstücke 6 bzw. 7" der Traversen 2 und 2". Ersichtlicherweise teilt sich somit jeweils jeder zweite Flächenabschnitt in der Aufnahme zweier verschiedener Klemmstücke.

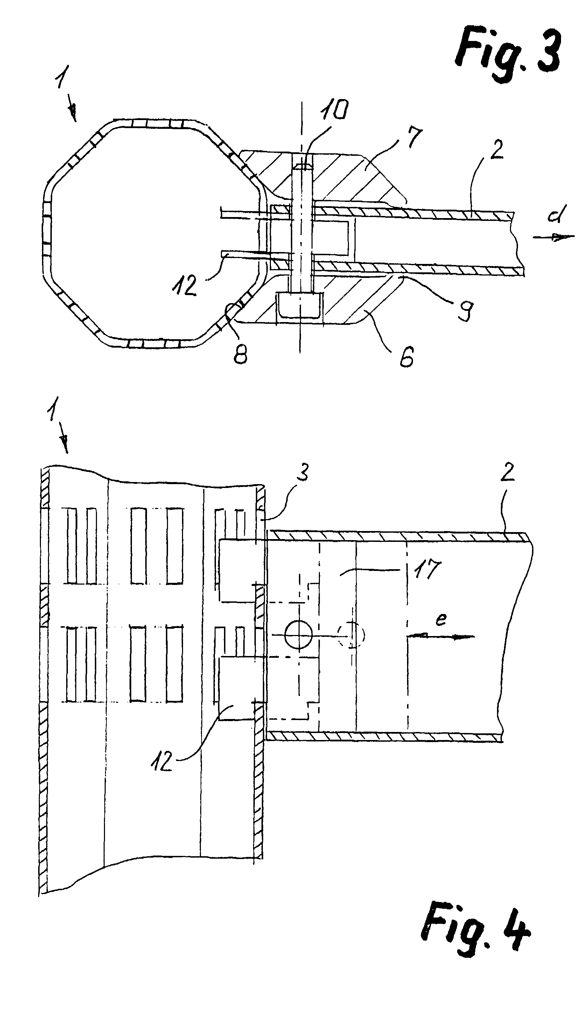

Die Figuren 3 und 4 zeigen im Detail nochmals die Verbindung zwischen der Traverse 2 und der Säule 1. In Figur 4 sind jedoch die Klemmstücke aus Gründen der besseren Uebersichtlichkeit weggelassen. Die Klemmstücke 6 und 7 haben einen etwa parallelogrammartigen Querschnitt, wobei die Spannflächen 8 einen sich gegen die Säule 1 hin öffnenden Winkel einschliessen. Die relative Neigung dieser Spannflächen ist dabei von Bedeutung, um eine ausreichend grosse Kraftresultierende in Pfeilrichtung d zu erzielen. Die Stützleisten 9 an den Klemmstücke bewirken ein linienförmiges Anliegen, so dass zwischen Schraubenachse der Klemmschraube 10 und einer Stützleiste 9 einerseits und zwischen einer Spannfläche 8 und einer Stützleiste 9 anderseits ein Doppelhebel gebildet wird. Selbstverständlich müsste die Stützleiste 9 nicht zwingend durchgehend sein, sondern sie könnte auch Unterbrechungen aufweisen.

Die winkelförmigen Laschen können einstückig mit einem U-förmigen Bügel 17 ausgebildet sein, der in die Traverse 2 eingeschweisst ist. Alternativ könnte der U-Bügel 17 oder jedes andere Eingriffsmittel jedoch auch verschiebbar gelagert sein, so dass er in Pfeilrichtung e zwischen der dargestellten Position und einer strichpunktartig angedeuteten zurückgezogenen Position hin und her geschoben werden kann. Das Zurückziehen des Eingriffsmittels erlaubt, wie bereits erwähnt, das Einfügen einer Traverse zwischen starre, parallele Säulen.

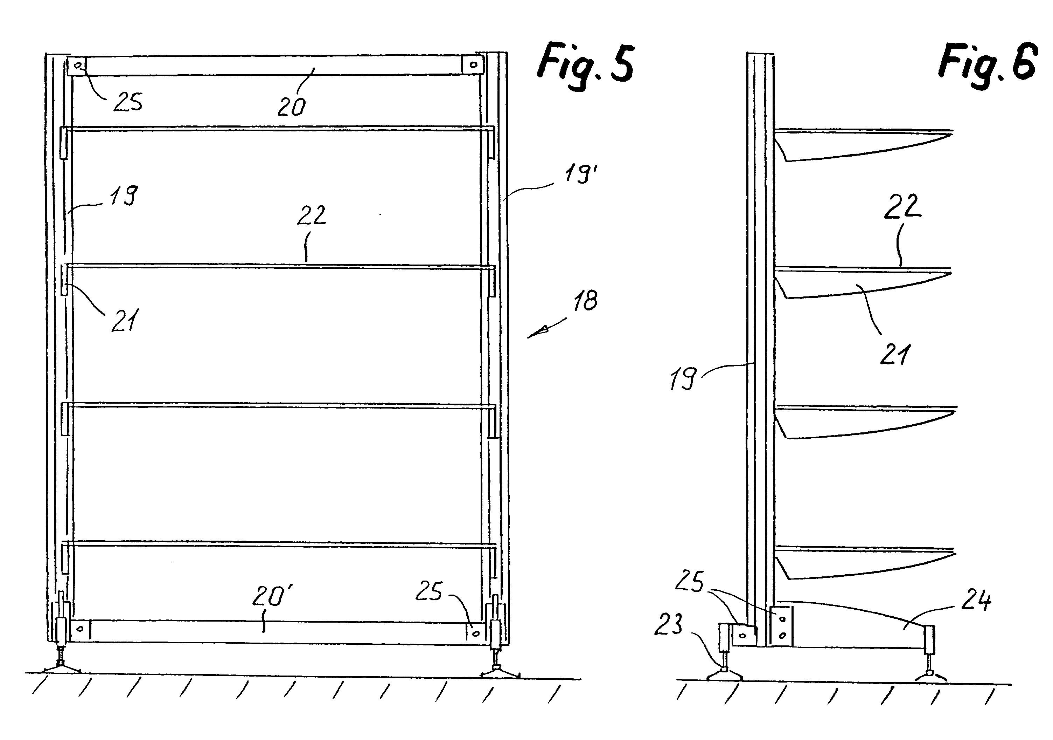

Die Figuren 5 und 6 zeigen nur ein Beispiel der praktisch unbegrenzten Kombinationsmöglichkeiten zwischen Säulen und Traversen. Die beiden parallelen Säulen 19 und 19' bilden zusammen mit den horizontalen Traversen 20 und 20' einen starren Rahmen. An den Säulen sind Konsolen 21 eingehängt, auf denen Tablare 22 aufliegen. Das Auslegergestell steht auf den Hinterfüssen 23 und auf den Fussauslegern 24. Alle starren Verbindungen mit den Säulen 19, 19' werden durch Klemmstücke 25 gebildet. Die Konsolen 21 können entweder nur lose eingehängt oder ebenfalls mit einer erfindungsgemässen Verbindung an die Säulen angeschlossen werden.

## Patentansprüche

1. Traggestell mit wenigstens einer Säule (1) und wenigstens einer lösbar mit der Säule verbundenen Traverse (2), wobei die Säule ein mit Oeffnungen (3) versehenes Hohlprofil ist und die Traverse an ihrem der Säule zugewandten Endabschnitt (4) Eingriffsmittel (5) aufweist, welche in die Oeffnungen (3) eingreifen, sowie mit Spannmitteln zum kraftschlüssigen Verspannen der Eingriffsmittel in den Oeffnungen, dadurch gekennzeichnet, dass als Spannmittel auf gegenüberliegenden Aussenseiten des Endabschnitts (4) der Traverse (2) je ein Klemmstück (6, 7) angeordnet ist, das mit einer der Säule zugewandten Spannfläche (8) an der Säule anliegt und das sich mit einer von der Säule abgewandten Stützleiste (9) an der Traverse (2) abstützt, dass die Klemmstücke (6, 7) mit einer zwischen der Spannfläche (8) und der Stützleiste (9) angeordneten Klemmschraube (10) gegen die Traverse feststellbar sind, und dass die Spannflächen der Klemmstücke derart zur Oberfläche (11) der Säule verlaufen, dass beim Anziehen der Klemmschraube eine Spannkraft in Längsrichtung der Traverse erzeugt wird.

2. Traggestell nach Anspruch 1, dadurch gekennzeichnet, dass die Oeffnungen (3) in der Säule (1) in Längsrichtung verlaufende Schlitze sind und dass die Eingriffsmittel (5) wenigstens eine abgewinkelte Lasche (12) aufweisen, welche in einen Schlitz einführbar ist und diesen hintergreift.

3. Traggestell nach Anspruch 2, dadurch gekennzeichnet, dass die Eingriffsmittel zwei parallel und übereinander angeordnete Laschenpaare aufweisen, wobei jede Lasche in einen separaten Schlitz eingreift.

4. Traggestell nach einem der Ansprüche 1 bis 3, dadurch gekennzeichnet, dass die Eingriffsmittel fest am Endabschnitt (4) der Traverse angeordnet sind und über diesen hinausragen.

5. Traggestell nach einem der Ansprüche 1 bis 3, dadurch gekennzeichnet, dass die Eingriffsmittel zwischen einer in den Endabschnitt (4) zurückgezogenen Montagestellung und einer über den Endabschnitt hinausragenden Eingriffsstellung verschiebbar gelagert sind.

6. Traggestell nach einem der Ansprüche 1 bis 5, dadurch gekennzeichnet, dass die Klemmschraube (10) ein erstes Klemmstück (6) und die Traverse (2) durchdringt und in eine Gewindebohrung (14) im zweiten Klemmstück (7) eingeschraubt ist.

7. Traggestell nach einem der Ansprüche 1 bis 6, dadurch gekennzeichnet, dass die Spannflächen (8) der Klemmstükke (6, 7) zwischen sich einen sich gegen die Säule (1) öffnenden Winkel bilden.

8. Traggestell nach einem der Ansprüche 1 bis 7, dadurch gekennzeichnet, dass die Klemmstücke (6, 7) prismatische Körper mit einem in der Ebene der Traverse im wesentlichen parallelogrammartigen Querschnitt sind.

9. Traggestell nach einem der Ansprüche 1 bis 8, dadurch gekennzeichnet, dass die Säule (1) ein Rohr mit einem polygonalen Querschnitt ist, und dass auf jedem Flächenabschnitt des Rohres Oeffnungen angeordnet sind.

10. Traggestell nach einem der Ansprüche 1 bis 9, dadurch gekennzeichnet, dass die Säule (1) ein Rohr mit einem polygonalen, wenigstens sechseckigen Querschnitt ist, wobei die Anzahl Ecken stets durch zwei teilbar ist und dass jeweils ein Flächenabschnitt des Rohres als stirnseitige Anschlagfläche für die Traverse dient, während die beiden an die Anschlagfläche anschliessenden Flächenabschnitte als Anlageflächen für die Spannflächen (8) der Klemmstücke dienen.

## Claims

1. A load bearing structure with at least one column (1) and at least one cross member (2) releasably connected to the column, wherein the column is a hollow profile provided with openings (3) and the cross member at its end section proximal to the column comprises engagement means (5) which engage into the openings (3), as well as with tensioning means for the non-positive tensioning of the engagement means in the openings, characterised in that as tensioning means on oppositely lying outer sides of the end section (4) of the cross member (2) in each case there is arranged a clamping piece (6, 7) which with a tensioning surface (8) proximal to the column bears on the column and which with a support ledge (9) distant to the column is supported on the cross member (2), that the clamping pieces (6, 7) with a clamping screw (10) arranged between the tensioning surface (8) and the support ledge (9) are fixable against the cross member, and that the tensioning surfaces of the clamping pieces run to the surface (11) of the column in a manner such that on tightening the clamping screw a tensioning force is produced in the longitudinal direction of the cross member.

2. A load bearing structure according to claim 1, characterised in that the openings (3) in the column (1) are slots running in the longitudinal direction and that the engagement means (5) comprise at least one tab (12) bent in a right-angled manner, which may be introduced into a slot and engages behind this.

3. A load bearing structure according to claim 2, characterised in that the engagement means comprise two tab pairs arranged parallel and over one another, wherein each tab engages into a separate slot.

4. A load bearing structure according to one of the claims 1 to 3, characterised in that the engagement means are rigidly arranged at the end section (4) of the cross member and project beyond this.

5. A load bearing structure according to one of the claims 1 to 3, characterised in that the engagement means are displaceably mounted between an assembly position retracted into the end section and an engagement position projecting beyond the end section.

6. A load bearing structure according to one of the claims 1 to 5, characterised in that the clamping screw (10) penetrates a first clamping piece (6) and the cross member (2) and is screwed into a threaded bore (14) in the second clamping piece (7).

7. A load bearing structure according to one of the claims 1 to 6, characterised in that the tensioning surfaces (8) of the clamping pieces (6, 7) between them form an angle opening towards the column (1).

8. A load bearing structure according to one of the claims 1 to 7, characterised in that the clamping pieces (6, 7) are prismatic bodies with a cross section which in the plane of the cross member are essentially parallelogram-like.

9. A load bearing structure according to one of the claims 1 to 8, characterised in that the column (1) is a tube with a polygonal cross section, and that on each surface section of the tube there are arranged openings.

10. A load bearing structure according to one of the claims 1 to 9, characterised in that the column (1) is a tube with a polygonal, at least hexagonal cross section, wherein the number of corners can always be divided by two and that in each case one surface section of the tube serves as an end-face side abutment surface for the cross member, whilst the two surface sections connecting to the abutment surface serve as bearing surfaces for the tension surfaces (8) of the clamping pieces.

## Revendications

1. Châssis porteur comportant au moins un montant (1), au moins une traverse (2) reliée au montant de manière amovible, le montant étant constitué par un profilé creux pourvu d'ouvertures (3) tandis que la traverse présente sur sa section d'extrémité (4) tournée vers le montant des moyens d'accrochage (5) qui pénètrent dans les ouvertures (3), et enfin des moyens de serrage destinés à fixer par adhérence les moyens d'accrochage dans les ouvertures, caractérisé en ce qu'il est prévu comme moyens de serrage, sur les côtés extérieurs opposés de la section d'extrémité (4) de la traverse (2), des pièces de serrage respectives (6, 7) qui sont appliquées avec une surface de serrage (8) tournée vers le montant contre ledit montant et qui s'appuient avec un rebord d'appui (9) opposé au montant à la traverse (2), en ce que les pièces de serrage (6, 7) sont aptes à être bloquées contre la traverse à l'aide d'une vis de serrage (10) disposée entre la surface de serrage (8) et le rebord d'appui (9), et en ce que les surfaces de serrage des pièces de serrage sont dirigées vers la surface (11) du montant de telle sorte que lorsqu'on serre la vis, une force de serrage est générée dans le sens longitudinal de la traverse.

2. Châssis porteur selon la revendication 1, caractérisé en ce que les ouvertures (3) prévues dans le montant (1) sont des fentes qui s'étendent dans le sens longitudinal, et en ce que les moyens d'accrochage (5) ont au moins une patte coudée (12) qui est apte à être introduite dans une fente et qui vient en prise derrière celle-ci.

3. Châssis porteur selon la revendication 2, caractérisé en ce que les moyens d'accrochage ont deux paires de pattes parallèles et superposées, chaque patte pénétrant dans une fente séparée.

4. Châssis porteur selon l'une des revendications 1 à 3, caractérisé en ce que les moyens d'accrochage sont solidaires de la section d'extrémité (4) de la traverse et dépassent de celle-ci.

5. Châssis porteur selon l'une des revendications 1 à 3, caractérisé en ce que les moyens d'accrochage sont montés pour être mobiles entre une position de montage dans laquelle ils sont rétractés dans la section d'extrémité (4), et une position d'accrochage dans laquelle ils dépassent de cette section.

6. Châssis porteur selon l'une des revendications 1 à 5, caractérisé en ce que la vis de serrage (10) passe à travers une première pièce de serrage (6) et la traverse (2), et est vissée dans un perçage fileté (14) de la seconde pièce de serrage (7).

7. Châssis porteur selon l'une des revendications 1 à 6, caractérisé en ce que les surfaces de serrage (8) des pièces de serrage (6, 7) définissent entre elles un angle qui s'ouvre vers le montant (1).

8. Châssis porteur selon l'une des revendications 1 à 7, caractérisé en ce que les pièces de serrage (6, 7) sont des corps prismatiques à section transversale globalement en forme de parallélogramme dans le plan de la traverse.

9. Châssis porteur selon l'une des revendications 1 à 8, caractérisé en ce que le montant (1) est un tube à section transversale polygonale, et en ce que des ouvertures sont prévues sur chaque section de surface du tube.

10. Châssis porteur selon l'une des revendications 1 à 9, caractérisé en ce que le montant (1) est un tube à section polygonale, au moins hexagonale, le nombre d'angles étant toujours divisible par deux, et en ce que chaque section de surface du tube sert de surface de butée frontale pour la traverse tandis que les deux sections de surface qui font suite à cette surface de butée servent de surfaces d'application pour les surfaces de serrage (8) des pièces de serrage.
